# EUROPÄISCHE PATENTSCHRIFT

(11) **EP 1 146 449 B1**
(45) Veröffentlichungstag und Bekanntmachung des Hinweises auf die Patenterteilung: **09.01.2002**
(21) Anmeldenummer: 00890115.9
(22) Anmeldetag: 11.04.2000
(51) Int. Cl.: G06F 17/60

(54) **Anlage zur Erzeugung von Nutzungsprofilen und Mobiltelephon hierfür**
System and cellular phone for building use profiles
Installation et téléphone mobile pour la génération de profils d'utilisation

(43) Veröffentlichungstag der Anmeldung: 17.10.2001
(73) Patentinhaber: Lammerhuber, Peter, 2392 Sulz (AT)
(72) Erfinder: Lammerhuber, Peter, 2392 Sulz (AT)
(74) Vertreter: Weiser, Andreas, Dipl.-Ing.

(56) Entgegenhaltungen:
- EP-A- 0 645 728
- EP-A- 0 833 469
- DE-U- 29 814 503
- US-A- 4 816 904
- US-A- 5 382 970

## Beschreibung

Die vorliegende Erfindung betrifft eine Anlage zur Erzeugung von zeitgenauen Nutzungsprofilen über die Nutzung von Produkten, wie Medienprodukten, die mit einem scannerlesbaren Identifikationscode versehen sind, durch eine Mehrzahl von Nutzern, sowie ein besonders dafür geeignetes Mobiltelephon.

In der Marktforschung wird die Nutzung von Medienprodukten häufig an Hand von unabhängigen Stichproben, sog. "Samples", oder an einem sog. "Panel" erhoben, d.h. einer über einen längeren Zeitraum gleichbleibenden Gruppe von Personen oder Haushalten. Das Nutzungsverhalten des Samples bzw. Panels wird mit Hilfe von Fragebögen erfaßt, die manuell ausgefüllt werden. Die psychologische Aufwandsschwelle bei der Datenerfassung erhöht den Einfluß der Streuung der persönlichen Mitarbeit im Sample bzw. Panel auf das Endergebnis.

Im Zusammenhang mit Verbraucherprodukten sind auch im Haushalt fest installierte Datenerfassungsterminals bekannt, mit welchen die Produkte nach dem Einkauf erfaßt werden. Aus der US 4,816,904 ist eine Anlage zur automatischen Sammlung von Marktforschungsdaten mit Hilfe von Erfassungsstationen am Konsumentenort bekannt, welche von einer Zentralstation über Festnetztelefonleitungen abgefragt werden. Die Anlage ist zur Erfassung von Fernsehgewohnheiten bestimmt und zu diesem Zweck fest mit einem Fernsehempfänger zusammengeschaltet. Eine spezielle Ausführungsform des Gerätes verfügt über einen Barcodelesestift, der mit einem eigenen Speicher ausgestattet ist und seine gesammelten Daten beim Einführen in einen Schacht der Konsumentenstation an diese übermittelt, welche ihrerseits dann die Daten über die Telefonleitung zur Zentralanlage sendet.

Der Barcodelesestift ist mit einem Speicher ausgestattet, welcher den Produktcode und den Preis von etwa 300 verschiedenen Produkten speichern kann, um alle an einem Tag vom Konsumenten gekauften Produkte zu speichern.

Die bekannten Anlagen verringern zwar die Erfassungsaufwandsschwelle und erhöhen damit die Genauigkeit des Meßergebnisses, es läßt sich mit ihnen jedoch nicht der exakte Zeitpunkt der Nutzung eines Produktes erfassen. Ebenso ist die Erstellung eines Nutzungsprofiles über die Nutzung von wiederholt nutzbaren Produkten, wie einer Vorratspackung, oder von "unverbrauchbaren" Produkten, wie einem Medienprodukt, mit den bekannten Anlagen nicht möglich. Unter dem Begriff "Medienprodukt" werden hier alle Arten von Produkten des geistigen Eigentums verstanden, die auf einem Träger festgehalten sind, wie Printmedien, Audio- oder Videoaufzeichnungen, usw. Solche Produkte werden häufig auch außer Haus mitgenommen und genutzt, welche Nutzung mit den bekannten Anlagen ebenfalls nicht erfaßbar ist.

Die Erfindung setzt sich zum Ziel, eine neuartige Anlage zur Erzeugung von zeitgenauer Nutzungsprofilen über die Nutzung von Produkten zu schaffen, welche die genannten Nachteile überwindet. Dieses Ziel wird mit einer Anlage der genannten Art erreicht, die aufweist:
eine Mehrzahl von jeweils einem Nutzer zugeordneten Mobiltelephonen,
   die sich in einem Mobiltelephonnetz bewegen und jeweils mit einer Uhr, einem Scanner, einem Speicher und einer Nutzerkennung ausgestattet sind,
   beim Lesen eines Identifikationscodes zumindest die aktuelle Uhrzeit und den gelesenen Identifikationscode im Speicher abspeichern und
   auf ein Abfragesignal hin den Inhalt des Speichers zusammen mit der Nutzerkennung über das Mobiltelephonnetz an eine vorgegebene Empfangsadresse senden;
sowie mit einem Zentralrechner zum Anschluß an das Mobiltelephonnetz,
   dem eine Empfangsadresse im Mobiltelephonnetz zugeordnet ist und der mit einer Datenbank und einer Ausgabeeinheit ausgestattet ist,
   die von einzelnen Mobiltelephonen empfangenen Speicherinhalte und Nutzerkennungen in der Datenbank abspeichert
   und anhand der Datenbank mittels der Ausgabeeinheit die Nutzungsprofile erzeugt.

An dieser Stelle sei erwähnt, daß Mobiltelephone, die mit einem Scanner ausgestattet sind, aus der DE-U-298 14 503 oder der EP-A-0 645 728 an sich bekannt sind. Die DE-U-298 14 503 beschreibt den Einsatz eines solchen "Scannerhandies" beim Einkaufen im Supermarkt, um beispielsweise die Kaufsumme auszurechnen. An einen weitergehenden Einsatz, insbesondere auch eine Ausnützung der Funkübertragungsfunktion des Mobiltelephones, ist in dieser Schrift nicht gedacht. Das Scannerhandy der EP-A-0 645 728 ist zur Speicherung des Ortes und Zustandes von Waren in einem Geschäft ausgebildet und wird an die Registrierkasse angeschlossen, um die Daten an ein Inventursystem zu übergeben.

Die Erfindung beruht auf der Erkenntnis, daß Mobiltelephone - ähnlich wie Armbanduhren - zu einem Alltagsgegenstand geworden sind, der beinahe ständig mitgeführt wird. Die Erfindung kombiniert die Mobilitätsmöglichkeiten eines Mobiltelephones mit integriertem Scanner mit der zeitlichen Zuordnungsmöglichkeit, welche eine Uhr im Mobiltelephon bietet, und den einem Mobiltelephon innewohnenden Datenübertragungsmöglichkeiten zu einer zentralen Sammelstelle. In Verbindung mit einem Zentralrechner wird so eine völlig neue Anlage geschaffen, die überraschend einfach aufgebaut ist, hohe Benutzerakzeptanz aufgrund niedriger Erfassungsaufwandsschwelle besitzt und für den Nutzer ständig verfügbar ist. Durch das Zusammenwirken dieser Elemente wird die Genauigkeit des Meßergebnisses wesentlich erhöht.

Am Beginn und am Ende jeder Nutzung eines Produktes, z.B. beim Ergreifen und Weglegen einer Zeitschrift, führt der Nutzer den Scanner jeweils einmal über den Produktidentifikationscode, und die Anfangs- und Endzeit der Nutzung werden zusammen mit dem Identifikationscode im Speicher des Mobiltelephones aufgezeichnet. Das Mobiltelephon kann auch direkt die Zeitspanne zwischen Beginn und Ende der Nutzung berechnen und zusammen mit dem Identifikationscode speichern. Zusätzlich könnte der Benützer über die Tasten des Mobiltelephones eine qualitative Bewertung des Gelesenen oder der Nutzungsintensität eingeben, welche zusammen mit den Uhrzeiten und den Identifikationscodes gespeichert wird.

Das Abfragesignal kann vom Benutzer z.B. durch Betätigen einer Taste des Mobiltelephones ausgelöst werden, woraufhin dieses die Verbindung zum Zentralrechner aufbaut und die Daten sendet. Bevorzugt sendet jedoch der Zentralrechner das Abfragesignal an die Mobiltelephone, bevorzugt in Abständen wiederholt, besonders bevorzugt täglich. Die Abfrage kann insbesondere auch in der Nacht zum kostengünstigen Nachttarif erfolgen. Auf diese Weise wird die Datenbank im Zentralrechner kontinuierlich aktualisiert, so daß jederzeit Zwischenmeßergebnisse erzeugt werden können. In einer vereinfachten Variante des erfindungsgemäßen Systems könnte das Mobiltelephon mit gefülltem Speicher auch als Ganzes in einer entsprechenden Sammelstelle abgegeben werden, welche den Speicherinhalt auswertet.

Ein weiterer Aspekt der Erfindung besteht in der Schaffung eines Mobiltelephones, das besonders für eine solche Anlage geeignet ist, mit einer Uhr, einem Speicher und einer Nutzerkennung, und das sich gemäß der Erfindung dadurch auszeichnet, daß es in an sich bekannter Weise mit einem Scanner für scannerlesbare Identifikationscodes ausgestattet ist, und daß es beim Lesen eines Identifikationscodes zumindest die aktuelle Uhrzeit und den gelesenen Identifikationscode im Speicher abspeichert.

In jedem Fall ist es besonders günstig, wenn die Uhr eine Funkuhr ist, was Meßfehler aufgrund verstellter Uhren ausschließt.

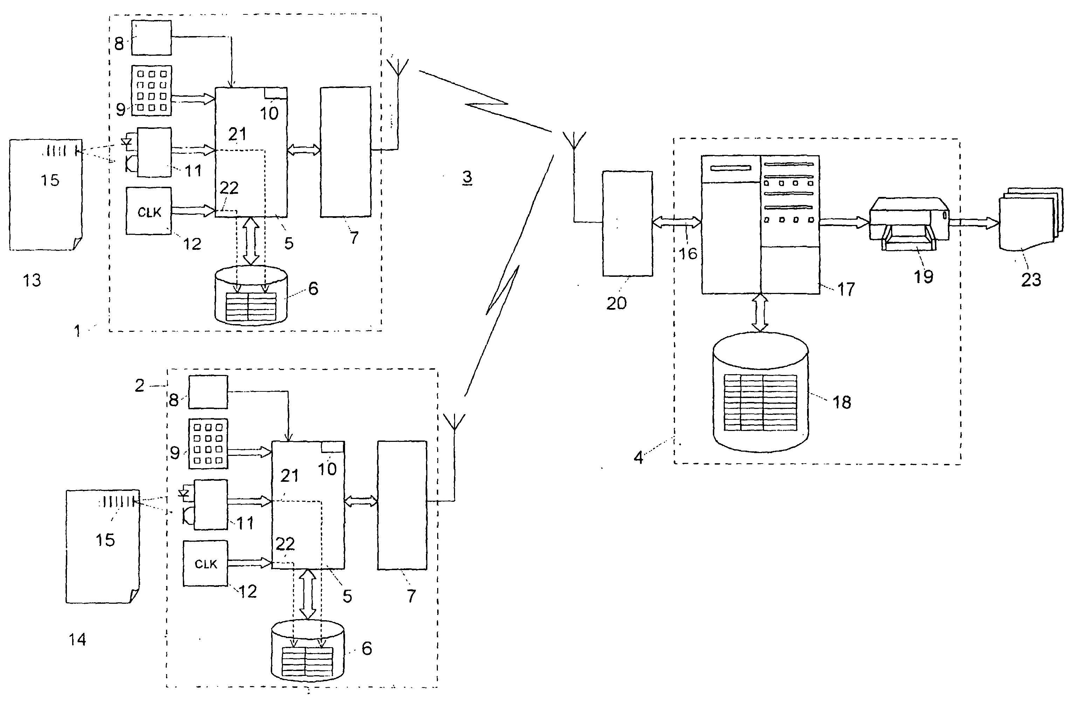

Die Erfindung wird nachstehend anhand eines in der Zeichnung veranschaulichten Ausführungsbeispieles näher erläutert. Die Zeichnung zeigt das Blockschaltbild einer erfindungsgemäßen Anlage. Gleiche Elemente sind mit gleichen Bezugszeichen bezeichnet.

Die Figur zeigt zwei beispielhafte Mobiltelephone 1, 2, die stellvertretend für eine Vielzahl sich in einem Mobiltelephonnetz 3 bewegender Mobiltelephone sind. Das Mobiltelephonnetz 3 steht mit einem Zentralrechner 4 in Verbindung.

Die Mobiltelephone 1, 2 sind jeweils mit einem Mikroprozessor 5 ausgestattet, der mit einem Speicher 6 und einem Hochfrequenzkreis 7 zur Kommunikation im Mobiltelephonnetz 3 in Verbindung steht. Eine Anzeigeeinheit 8 und eine Tastatur 9 sind an den Mikroprozessor 5 angeschlossen.

Jedes Mobiltelephon 1, 2 ist ferner mit einer Nutzerkennung 10 versehen, die beispielsweise in einem ROM-Speicher oder auf einer SIM-Chipkarte, die in das Mobiltelephon eingesetzt wird, festgeschrieben ist.

Bis hierher entspricht der Aufbau der Mobiltelephone 1, 2 jenem von herkömmlichen Mobiltelephonen, z.B. nach dem GSM-Standard für ein Mobiltelephonnetz 3 vom GSM-Typ. Alternativ ist auch jeder andere bekannte Mobiltelephonnetzstandard möglich.

Die Mobiltelephone 1, 2 sind weiters mit einem Scanner 11 und einer Uhr 12 ausgestattet, welche mit dem Mikroprozessor 5 in Verbindung stehen. Der Scanner 11 kann jeder beliebige in der Technik bekannte Scanner sein, z.B. eine CCD-Kamera mit nachgeschalteter OCR-Schrifterkennung. Bevorzugt ist der Scanner 11 ein Strichcodescanner (Barcodescanner) für Strichcodes nach dem EAN-Standard. Mit 13, 14 sind zwei beispielhafte Printmedienprodukte (z.B. Zeitschriften) dargestellt, welche einen scannerlesbaren Identifikationscode 15 tragen, z.B. einen EAN-Strichcode. Die Scanner 11 der Mobiltelephone 1, 2 sind bei dem dargestellten Beispiel gerade auf die Identifikationscodes 15 der Printmedienprodukte 13, 14 gerichtet.

Der Zentralrechner 4 umfaßt eine Schnittstelle 16 zum Anschluß an das Mobiltelephonnetz 3, eine Verarbeitungseinheit 17, eine Datenbank 18 und eine Ausgabeeinheit 19. Die Ausgabeeinheit 19 kann beliebig ausgebildet sein, z.B. als Drucker, Bildschirm, als Speichereinheit usw. Die Schnittstelle 16 kann z.B. über ein drahtgebundenes Telephon- oder Datennetz zu einem Vermittlungs- oder Dienstzentrum 20 des Mobiltelephonnetzes 3 führen, oder selbst als Zellen-Sendeempfänger des Mobiltelephonnetzes 3 ausgebildet sein. Für den Fachmann ist klar, daß die dargestellten Komponenten auch auf andere in der Technik bekannte Arten aufgeteilt bzw. zusammengefaßt sein können.

Die dargestellte Anlage und ihre Komponenten haben die folgenden Funktionalitäten.

Beim Lesen eines Identifikationscodes 15 eines Produktes 13, 14 mit Hilfe des Scanners 11 speichert der Mikroprozessor 5 eines Mobiltelephones 1, 2 den gelesenen Identifikationscode 15 zusammen mit der aktuellen Uhrzeit, wie sie von der Uhr 12 erhalten wird, im Speicher 6 ab. Die Signalwege vom Scanner 11 und der Uhr 12 zum Speicher 6 sind schematisch unter 21 und 22 dargestellt. Es versteht sich, daß diese Signalwege auch durch eine entsprechende Softwarelösung implementiert werden können.

Der Speichervorgang kann vom Scanner 11 automatisch ausgelöst werden, beispielsweise indem dieser ständig aktiv ist und bei Erfassung eines gültigen Identifikationscodes 15 im Zusammenspiel mit dem Mikroprozessor 5 die Abfrage der Uhrzeit von der Uhr 12 und die Speicherung im Speicher 6 veranlaßt. Alternativ könnte diese Operation auch durch Betätigen des Tastenfeldes 9 ausgelöst werden.

Bevorzugt ist die Uhr 12 eine Funkuhr, welche ihr Zeitsignal in bekannter Weise von einem Zeitsignalsender, z.B. im Langwellenbereich, empfängt.

In einer bevorzugten Anwendung bewegt ein Benutzer den Scanner 11 seines Mobiltelephones 1, 2 zu Beginn und zu Ende der Nutzung eines Produktes 13, 14 über den Identifikationscode 15. Auf diese Weise sammeln sich im Speicher 6 Datensätze über dem Nutzungsbeginn und das Nutzungsende eines bestimmten Produktes an. Alternativ kann der Mikroprozessor 5 bei der zweiten Erfassung eines gleichen Identifikationscodes automatisch das Nutzungsende erkennen und die Nutzungszeitspanne berechnen, so daß nur die Nutzungszeitspanne zusammen mit dem Produktidentifikationscode 15 im Speicher 6 hinterlegt wird. Dem Fachmann ist klar, daß die Strukturierung des Speichers 6 entsprechend gewählt werden kann.

In zeitlichen Abständen, z.B. einmal am Tag, erfolgt eine Übermittlung des Inhaltes des Speichers 6 über das Mobiltelephonnetz 3 an den Zentralrechner 4, welcher durch eine vorgegebene Empfangsadresse im Mobiltelephonnetz adressiert wird. Die Übermittlung kann z.B. zeitgesteuert von der Uhr 12 im Mobiltelephon 1, 2 ausgelöst werden, oder durch ein Betätigen des Tastenfeldes 9, oder bevorzugt durch ein Abfragesignal des Zentralrechners 4, das in Form eines Rundrufes oder einzeln an alle Mobiltelephone 1, 2 im Feld ausgesandt wird. Letztere antworten mit der Übersendung ihres Speicherinhaltes 6, jeweils zusammen mit einer Übersendung der Nutzerkennung 10.

Der Zentralrechner 4 speichert die empfangenen Speicherinhalte zusammen mit den übermittelten Nutzerkennungen 10 in der Datenbank 18. Anhand der Datenbank 18 können dann in an sich bekannter Weise mit Hilfe der Ausgabeeinheit 19 Nutzungsprofile 23, z.B. in Form von Ausdrucken, angefertigt werden. Hiezu können alle bekannten statistischen Auswertungsverfahren herangezogen werden.

Bei jeder Nutzung eines Produktes 13, 14 kann der Nutter zusätzlich über das Tastenfeld 9 eine qualitative Bewertung des Produktes oder seiner Nutzungsintensität eingeben, welche zusammen mit dem Identifikationscode und der Uhrzeit im Speicher 6 gespeichert wird. Auch solche Daten zählen zum "Speicherinhalt" im Sinne der vorliegenden Beschreibung.

Die vorgestellte Anlage eignet sich insbesondere zur Erzeugung von Nutzungsprofilen über die Nutzung von wiederholt nutzbaren Produkten, wie Vorratspackungen und Großpackungen von Verbrauchsgütern (Nahrungsmitteln, Waschmitteln, Reinigungsmitteln usw.) oder unverbrauchbaren Produkten, wie Printmedienprodukten (Zeitungen, Zeitschriften usw.), Audio- und Videoaufzeichnungen (CDs, DVDs, Videokassetten usw.),

Eine vereinfachte Anwendung besteht in der Erfassung des genauen Zeitpunktes des Verbrauchers von Einmal-Verbrauchsgütern; solche Güter werden oft erst geraume Zeit nach ihrem Erwerb tatsächlich verwendet, oft auch erst außer Haus, und die vorgestellte Anlage ermöglicht hier eine zeitgenaue Erfassung und Zuordnung.

Die dargestellte Anlage hat insbesondere die folgenden Vorteile:
- Geringe Erfassungsaufwandsschwelle: wenige aktive Schritte des Nutzers notwendig.
- Neues Meßniveau: zeitgleiche Messung und Speicherung mit der Nutzung (nicht mehr von der Erinnerungsleistung des Befragten abhängig).
- Breite Akzeptanz des Gerätes: Mobiltelephone sind mittlerweile zu einem Alltagsgegenstand geworden, dessen Bedienung jedermann geläufig ist. Ein bereits in Verwendung befindliches Gerät erhält zusätzliche Funktionalitäten. Die Möglichkeit zum Gratis- bzw. sehr günstigen Telefonieren stellt einen hohen Anreiz zur Mitarbeit dar.
- Ortsungebundener Einsatz in jeder Nutzungssituation.
- Flexibel: erweiterbar auf die Erhebung weiterer Kriterien und auf alle Arten von Produkten, z.B. Flugblätter, Direct-Mails, Gratiszeitungen.
- Neue Datenqualität: Daten für jeden Kalendertag; Daten über die Nutzungsdauer, Nutzungsintensität, Nutzungszeit und Anzahl der Nutzungsvorgänge; Direkte Verknüpfung der Daten mit dem Konsumverhalten.

Die Erfindung ist selbstverständlich nicht auf die dargestellten Ausführungsformen beschränkt, sondern umfaßt alle Varianten und Modifikationen, die in den Rahmen der angeschlossenen Ansprüche fallen.

## Patentansprüche

1. Anlage zur Erzeugung von zeitgenauen Nutzungsprofilen über die Nutzung von Produkten, wie Medienprodukten, die mit einem scannerlesbaren Identifikationscode versehen sind, durch eine Mehrzahl von Nutzern, mit:
a) einer Mehrzahl von jeweils einem Nutzer zugeordneten Mobiltelephonen (1, 2), die sich in einem Mobiltelephonnetz (3) bewegen und jeweils mit einer Uhr (12), einem Scanner (11), einem Speicher (6) und einer Nutzerkennung (10) ausgestattet sind, beim Lesen eines Identifikationscodes (15) zumindest die aktuelle Uhrzeit und den gelesenen Identifikationscode im Speicher (6) abspeichern und auf ein Abfragesignal hin den Inhalt des Speichers (6) zusammen mit der Nutzerkennung (10) über das Mobiltelephonnetz (3) an eine vorgegebene Empfangsadresse senden;
b) sowie mit einem Zentralrechner (4) zum Anschluß an das Mobiltelephonnetz (3), dem eine Empfangsadresse im Mobiltelephonnetz (3) zugeordnet ist und der mit einer Datenbank (18) und einer Ausgabeeinheit (19) ausgestattet ist, die von einzelnen Mobiltelephonen (1, 2) empfangenen Speicherinhalte (6) und Nutzerkennungen (10) in der Datenbank (18) abspeichert und anhand der Datenbank (18) mittels der Ausgabeeinheit (19) die Nutzungsprofile (23) erzeugt.

2. Anlage nach Anspruch 1, **dadurch gekennzeichnet, daß** der Zentralrechner (4) das Abfragesignal an die Mobiltelephone (1, 2) sendet, bevorzugt in Abständen wiederholt, besonders bevorzugt täglich.

3. Anlage nach Anspruch 1 oder 2, **dadurch gekennzeichnet, daß** das Mobiltelephon (1, 2) zur Tasteingabe einer Produktqualitäts- oder Nutzungsintensitätsbewertung und zum Speichern derselben zusammen mit der Uhrzeit und dem Identifikationscode aus gebildet ist.

4. Mobiltelephon zur Erzeugung von zeitgenauen Nutzungsprofilen über die Nutzung von Produkten, die mit einem scannerlesbaren Identifikationscode versehen sind, für eine Anlage nach einem der Ansprüche 1 bis 3, das mit einem Speicher, einer Nutzerkennung, und einem Scanner (11) für scannerlesbare Identifikationscodes (15) ausgestattet ist, **dadurch gekennzeichnet**
a) daß es weiterhin mit einer Uhr ausgestattet ist;
b) daß es beim Lesen eines Identifikationscodes (15) zumindest die aktuelle Uhrzeit und den gelesenen Identifikationscode im Speicher (6) abspeichert; und
c) daß es auf ein Abfragesignal hin den Inhalt des Speichers (6) zusammen mit der Nutzerkennung (10) über das Mobiltelephonnetz (3) an eine vorgegebene Empfangsadresse sendet.

5. Mobiltelephon nach Anspruch 4 oder 5, **dadurch gekennzeichnet, daß** die Uhr (12) eine Funkuhr ist.

6. Mobiltelephon nach einem der Ansprüche 4 bis 6, **dadurch gekennzeichnet, daß** das Mobiltelephon (1, 2) zur Tasteingabe einer Produktqualitäts- oder Nutzungsintensitätsbewertung und zum Speichern derselben zusammen mit der Uhrzeit und dem Identifikationscode ausgebildet ist.

## Claims

1. System for the production of accurately timed usage profiles about the use of products, such as media products which are provided with a scanner-readable identification code, by a plurality of users having:
a) a plurality of mobile telephones (1, 2) each assigned to one user which are moving in a mobile telephone network (3) and are each equipped with a clock (12), a scanner (11), a memory (6) and a user identification (10), on reading an identification code (15) store at least the current time and the identification code read in the memory (6) and on an interrogation signal send the contents of the memory (6) together with the user identification (10) via the mobile telephone network (3) to a predetermined receiving address;
b) and having a central computer (4) for connection to the mobile telephone network (3) to which a receiving address in the mobile telephone network (3) is assigned and which is equipped with a database (18) and an output unit (19) which stores the memory contents (6) and user identifications (10) received from individual mobile telephones (1, 2) in the database (18) and produces the usage profiles (23) on the basis of the database (18) by means of the output unit (19).

2. System according to Claim 1, **characterised in that** the central computer (4) sends the interrogation signal to the mobile telephones (1, 2), preferably repeated at intervals, and by particular preference daily.

3. System according to Claim 1 or 2, **characterised in that** the mobile telephone (1, 2) is constructed for key input of a product quality or usage intensity evaluation and for storage of the same together with the time and the identification code.

4. Mobile telephone for the production of accurately timed usage profiles about the usage of products which are provided with a scanner-readable identification code for a system according to one of Claims 1 to 3 which is equipped with a memory, a user identification and a scanner (11) for scanner-readable identification codes (15), **characterised in that**
a) it is further equipped with a clock;
b) on reading an identification code (15) it stores at least the current time and the identification code read in the memory (6); and
c) that on an interrogation signal it sends the contents of the memory (6) together with the user identification (10) via the mobile telephone network (3) to a predetermined receiving address.

5. Mobile telephone according to Claim 4 or 5, **characterised in that** the clock (12) is a radio clock.

6. Mobile telephone according to one of Claims 4 to 6, **characterised in that** the mobile telephone (1, 2) is constructed for key input of a product quality or usage intensity evaluation and for storing the same together with the time and the identification code.

## Revendications

1. Installation pour la production de profils d'utilisation précis dans le temps concernant l'utilisation de produits, tels que des produits médiatiques, qui sont munis d'un code d'identification pouvant être lu par scanner, par une pluralité d'utilisateurs, avec :
a) une pluralité de téléphones mobiles 1,2) respectivement affectés à un utilisateur, téléphones mobiles qui se déplacent dans un réseau de téléphones mobiles et sont respectivement équipés d'une horloge (12), d'un scanner (11), d'une mémoire (6) et d'une reconnaissance d'utilisateur (10), et qui, lors de la lecture d'un code d'identification (15) mémorisent au moins l'heure actuelle et le code d'identification dans la mémoire (6) et qui, sur un signal d'interrogation envoient le contenu de la mémoire (6) conjointement avec la reconnaissance de l'utilisateur (10) par le réseau de téléphones mobiles (3) à une adresse de destinataire prédéfinie;
b) ainsi qu'avec un calculateur central (4) pour le raccordement sur le réseau de téléphone mobile (3), auquel est affectée une adresse de destinataire dans le réseau de téléphones mobiles (3), et qui est muni d'une banque de données (18) et d'une unité de sortie (19), qui mémorise dans la banque de données (18) les contenus de mémoire (6) et reconnaissances d'utilisateur (10) reçus par les différents téléphones mobiles (1,2) et produit les profils d'utilisation (23) au moyen de l'unité de sortie (19).

2. Installation selon la revendication 1, **caractérisée en ce que** le calculateur central (4) envoie le signal d'interrogation aux téléphones mobiles (1,2), de préférence de façon répétée par intervalles de temps, de façon particulièrement préférée chaque jour.

3. Installation selon la revendication 1 ou 2, **caractérisé en ce que** le téléphone mobile (1,2) est conçu pour l'entrée au clavier d'une évaluation de qualité de produit et d'intensité d'utilisation et pour la mémorisation de celle-ci conjointement avec l'heure et le code d'identification.

4. Téléphone mobile pour la production de profils d'utilisation précis dans le temps concernant l'utilisation de produits qui sont munis d'un code d'identification pouvant être lu par scanner, pour une installation selon l'une des revendications 1 à 3, qui est muni d'un scanner (11) pour les codes d'identification (15) pouvant être lus au scanner, **caractérisé en ce qu'**il est de plus muni d'une horloge, **en ce que** lors de la lecture d'un code d'identification (15) il mémorise au moins l'heure actuelle et le code d'identification lu dans la mémoire (6); et **en ce que** sur un signal d'interrogation, il envoie le contenu de la mémoire (6) conjointement avec la reconnaissance de l'utilisateur (10) par le réseau de téléphones mobiles (3) à une adresse de destinataire prédéfinie.

5. Téléphone mobile selon la revendication 4 ou 5, **caractérisé en ce que** l'horloge (12) est une horloge radio.

6. Téléphone mobile selon l'une des revendications 4 à 6, **caractérisé en ce que** le téléphone mobile (1,2) est conçu pour l'entrée au clavier d'une évaluation d'utilisation ou de qualité de produit et pour la mémorisation de celle-ci conjointement avec l'heure et le code d'identification.
